# FASCICULE DE BREVET EUROPEEN

(11) **EP 0 705 406 B1**
(45) Date de publication et mention de la délivrance du brevet: **07.07.1999**
(21) Numéro de dépôt: 94913679.0
(22) Date de dépôt: 21.04.1994
(51) Int. Cl.: F16L 55/033, F01N 7/18

(54) **ENCEINTE DE PASSAGE D'UN FLUIDE SOUS PRESSION ET PROCEDE DE FABRICATION D'UNE TELLE ENCEINTE**
BEHÄLTER MIT DURCHFLUSS EINES UNTER DRUCK STEHENDEN FLUIDS, UND VERFAHREN ZUR HERSTELLUNG EINES SOLCHEN BEHÄLTERS
ENCLOSURE FOR THE PASSAGE OF A PRESSURIZED FLUID AND PROCESS FOR MAKING SAME

(30) Priorité: 21.06.1993 FR 9307496
(43) Date de publication de la demande: 10.04.1996
(73) Titulaire: MANULI AUTO FRANCE, 28000 Chartres (FR)
(72) Inventeur: BARON, Daniel, F-28630 Fontenay-sur-Eure (FR)
(74) Mandataire: Benech, Frédéric
(86) Numéro de dépôt international: FR9400455
(87) Numéro de publication internationale: WO9500796

(56) Documents cités:
- EP-A- 0 022 063
- US-A- 4 142 843

## Description

La présente invention concerne une enceinte selon le préambule de la revendication 1.

Elle trouve une application particulièrement importante bien que non exclusive dans le domaine des silencieux pour circuits de climatisation de véhicules automobiles ou des bouteilles déshydratantes utilisées sur de tels circuits.

On connaît déjà des enceintes pour silencieux de circuits hydrauliques du type ci-dessus défini.

Compte-tenu des impératifs de tenue à la pression de telles enceintes, il est nécessaire de prévoir une fixation solide de la demi-coque sur la pièce.

De tels silencieux sont donc en général fabriqués en acier, ce qui autorise alors un brasage après insertion de la pièce dans la demi-coque.

Mais une telle solution est d'une part coûteuse à mettre en oeuvre et d'autre part engendre des silencieux de poids important.

On connaît également (EP-A-0 022 063) une enceinte de passage de gaz d'échappement avec tube ajouré. Celle-ci est cependant inutilisable dans les applications envisagées.

La présente invention vise à fournir une enceinte répondant mieux que celles antérieurement connues aux exigences de la pratique notamment en ce qu'elle utilise des matériaux tels que les alliages d'aluminium, nettement plus légers, en ce qu'elle permet de diminuer l'épaisseur des parois de l'enceinte tout en respectant les mêmes normes de résistances à la pression, et en ce qu'elle entraîne une fabrication plus aisée et moins coûteuse desdites enceintes.

Dans ce but l'invention propose notamment une enceinte munie de tube, de passage d'un fluide sous pression selon la revendication 1.

Dans des modes de réalisation avantageux, on a de plus recours à l'une et/ou à l'autre des dispositions suivantes :
- les première et deuxième demi-coques sont en alliage d'aluminium,
- la portion d'extrémité de la paroi périphérique de la deuxième demi-coque est en contact ou sensiblement en contact avec la surface interne du fond de la première demi-coque ;
- le diamètre interne de la paroi cylindrique de la première demi-coque présente un rétrécissement au niveau de la portion d'extrémité de la paroi de la seconde demi-coque avec laquelle elle coopère en force ;
- le fond d'au moins une demi-coque comporte au moins un orifice cylindrique muni d'un tube de passage du fluide dans l'enceinte, ledit tube étant fixé audit fond par emboutissage du tube de part et d'autre du fond ;
- le tube est également fixé par collage dans l'orifice du fond ;
- l'orifice comprend un épaulement interne débouchant du côté de l'enceinte ;
- chaque fond comprend un orifice cylindrique muni d'un tube de passage, les orifices étant excentrés par rapport à l'axe des parois cylindriques ;
- l'enceinte comporte de plus au moins un joint torique en élastomère d'étanchéité entre les parois cylindriques des deux demi-coques.

L'invention propose également un procédé de fabrication d'une enceinte telle que décrite ci-dessus et notamment un procédé de fabrication d'une enceinte de passage d'un fluide sous pression en alliage d'aluminium, caractérisé en ce que
. on fixe deux tubes, respectivement par collage et emboutissage desdits tubes de part et d'autre des fonds de deux demi-coques, dans deux orifices percés dans lesdits fonds, de façon excentrée par rapport à l'axe desdites demi-coques,
. on enduit au moins en partie de colle polymérisable la surface interne ou externe d'au moins une des deux demi-coques,
. on introduit la demi-coque dite interne, dans l'autre demi-coque dite externe avec laquelle elle coopère à frottement, jusqu'à venir sensiblement en butée contre le fond de ladite demi-coque externe, et
. on sertit l'extrémité de la demi-coque externe sur le fond de la demi-coque interne.

La présente invention sera mieux comprise à la lecture des modes de réalisation particuliers donnés à titre d'exemple nullement limitatif.

La description se réfère aux dessins qui l'accompagnent dans lesquels :
- La figure 1 est une vue en coupe latérale d'un premier mode de réalisation de l'enceinte selon l'invention.
- La figure 2 est une vue selon la flèche II de la figure 1.
- La figure 3 est une vue en coupe latérale d'un autre mode de réalisation avec joint en élastomère.
- La figure 4 est une vue en coupe, en détail, de la fixation d'un tube sur un fond, avec joint.

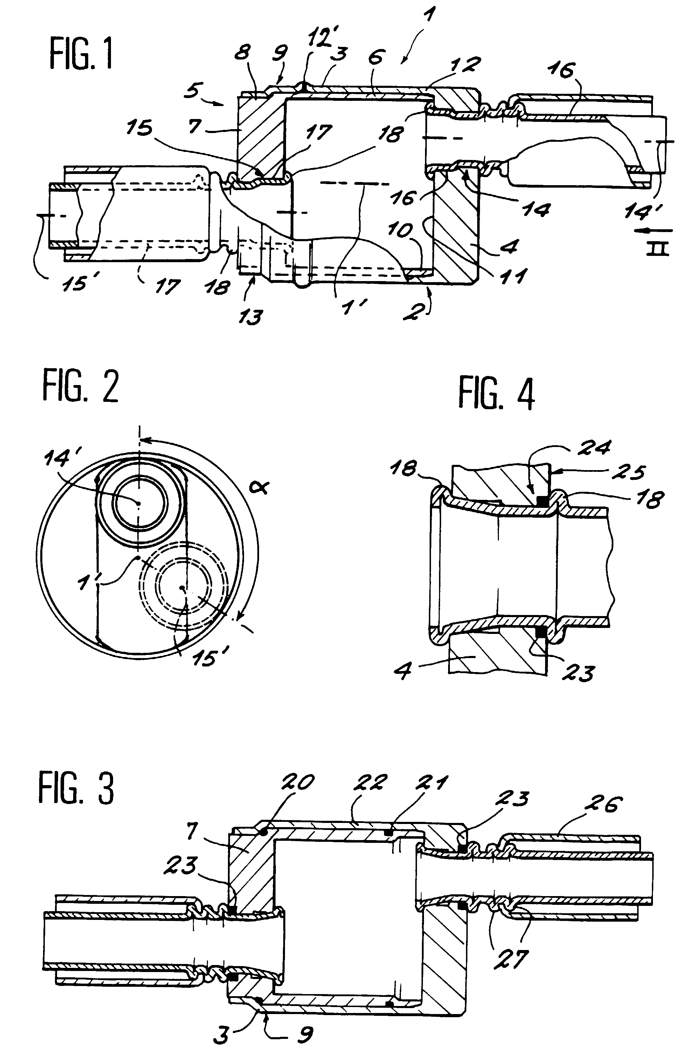

La figure 1 montre une enceinte 1 de passage d'un liquide sous pression pour circuit de conditionnement d'air. Le liquide est par exemple un fluide frigorigène du type connu sous les références HFC134A (R134A + PAGS) ou CFCl2=CCl₂F₂ (R12 + huiles minérales).

L'enceinte comprend une première demi-coque en forme de cloche, en alliage d'aluminium, externe, formée d'une paroi cylindrique mince 3 par exemple de 1 à 3 mm d'épaisseur, munie d'un côté d'un fond 4, par exemple d'épaisseur similaire sur une partie de la surface et de 1 à 2 cm d'épaisseur sur l'autre partie de support des tubes qui vont être décrits ci-après.

Le fond est de diamètre externe égal au diamètre externe de la paroi 3 avec laquelle il est formé d'une seule pièce, par exemple par filage par choc.

L'enceinte comprend également une deuxième demi-coque 5, en forme de cloche et en alliage d'aluminium, interne, comprenant une paroi mince cylindrique 6, par exemple de 1 à 3 mm d'épaisseur, de diamètre externe sensiblement égal au diamètre interne de la paroi 3 de la demi-coque externe avec laquelle elle coopère à frottement ou sensiblement à frottement sur toute sa surface.

La demi-coque interne 5 comprend également un fond 7, par exemple d'épaisseur variable comprise entre 3 et 15 mm, dont une portion externe 8 est par exemple de diamètre externe un peu inférieur au diamètre externe de la paroi cylindrique 7, pour former un épaulement 9. La demi-coque 5 est par exemple également obtenue par filage par choc.

Dans l'exemple de réalisation plus particulièrement décrit ici, la demi-coque 5 est enfoncée ou encastrée dans la première demi-coque 2 jusqu'à ce que la portion d'extrémité 10 de ladite demi-coque 5 vienne en butée sur la surface interne 11 du fond 4 de la première demi-coque 2.

Avantageusement le diamètre interne de la paroi cylindrique 3 de la première demi-coque présente un rétrécissement 12 au niveau de la portion d'extrémité 10, par exemple sur 1 ou 2 cm. Ce rétrécissement est par exemple cônique avec un angle égal à celui d'un angle morse (2 à 3°) et permet un emboîtage en force de ladite portion d'extrémité, qui peut elle-même être légèrement biseautée pour faciliter l'effet de coin.

Les deux demi-coques sont fixées entre elles par collage, par exemple par l'intermédiaire d'un ou plusieurs cordons de colle par exemple du type connue sous la marque dénomination KÖMMERLING, sous la référence CORAPOX 562L2, ou par l'intermédiaire d'une fine pellicule de ladite colle répartie sur toute la surface interne de la paroi 3, ou sur la surface externe de la paroi 6.

La première demi-coque est de plus sertie sur la périphérie 13 du fond 7 de la demi-coque 5, de façon connue en elle-même.

La colle emprisonnée entre l'épaulement 9 et le rétrécissement 12 au niveau de la portion d'extrémité 10 de la demi-coque 5, est polymérisée par chauffage, permettant ainsi la fixation des demi-coques ensemble, une bonne tenue mécanique et une excellente étanchéité.

On remarque que de façon surprenante, l'épaisseur totale de la paroi de l'enceinte obtenue par superposition des parois 3 et 6, peut être plus faible que celle d'une paroi unique, pour des mêmes performances de tenue à la pression, ce qui permet des gains en matière.

Les fonds 4 et 7 des deux demi-coques sont chacun et respectivement percés de part en part d'orifices cylindriques identiques 14 et 15 d'axe 14' et 15' parallèles à l'axe 1' des parois cylindriques de l'enceinte 1.

Dans le mode de réalisation plus particulièrement décrit ici, le diamètre de ces orifices est sensiblement égal au tiers du diamètre de la paroi cylindrique interne 6.

Leurs centres sont sensiblement situés à une distance de ladite paroi interne légèrement supérieure à leur rayon, pour permettre l'emboutissage des tubes comme cela va être décrit ci-après.

L'angle α formé dans le plan transversal à l'enceinte par les droites passant par les centres des deux orifices et le centre de l'enceinte cylindrique est par exemple de 120° (voir figure 2).

Un avantage de la présente invention est en fait de pouvoir donner à cet angle une valeur optimum compte tenu des contraintes d'installation.

Chaque orifice comprend un épaulement interne 16, 17 ou autrement dit présente un évidement annulaire cylindrique périphérique supplémentaire débouchant du côté de l'enceinte.

L'épaulement est par exemple situé aux deux tiers par rapport à la surface interne du fond correspondant.

Chaque orifice 14 et 15 est muni d'un tube raccord en alliage d'aluminium 16, 17 de passage du liquide réfrigérant, de diamètre externe égal au diamètre interne de l'orifice.

Les tubes peuvent également être en acier par exemple.

Ils sont fixés au fond correspondant par emboutissage du tube de part et d'autre du fond, ce qui engendre des pliures 18 de part et d'autre du fond, pliures dont la périphérie externe est par exemple tangente à la surface interne de la paroi 6 de la demi-coque 5.

L'emboutissage des tubes en alliage d'aluminium déforme également les extrémités de ces derniers qui viennent remplir les évidements annulaires périphériques des orifices.

La fixation des tubes s'effectue également par collage, une pellicule de colle du type décrit ci-dessus ayant été préalablement déposée à l'intérieur des orifices épaulés.

Le gonflement des tubes lors de leur emboutissage permet d'emprisonner la colle, avant sa polymérisation, par exemple par chauffage.

Avec cette fixation selon l'invention, on obtient ainsi une bonne tenue à l'arrachement, un système dont le couple anti-rotation des tubes par rapport aux demi-coques est par exemple supérieur à 8 m.daN et une excellente étanchéité.

On a représenté sur la figure 3 un mode de réalisation d'une enceinte selon l'invention comportant de plus des joints d'étanchéité complémentaire.

De tels joints peuvent notamment ête ajoutés lorsque le diamètre de l'enceinte devient important, par exemple supérieur à 10 cm.

Pour simplifier, les mêmes numéros de référence que pour la figure 1 seront utilisés pour désigner des pièces identiques.

La figure 3 montre donc l'enceinte munie de deux joints toriques 20 et 21, par exemple en élastomère du type connu sous la marque VITON, placés entre la surface externe de la paroi interne 6 de la demi-coque 5 et la surface interne de la paroi externe 3 de la demi-coque 2.

Le premier joint 20 est coincé entre l'épaulement 9 et la paroi 3 qui est sertie à ce niveau autour du fond 7.

Le joint 21 est quant à lui inséré dans une rainure externe 22 dans la portion d'extrémité 10 de la demi-coque 5.

Chaque tube peut également être muni d'un joint torique 23 (voir figure 4) disposé dans un évidement 24 effectué sur la face externe 25 du fond 4 ou 7, coincé entre ledit évidement et la pliure 18 du tube 16 ou 17, pliure qui vient de préférence en contact avec ladite face externe 25.

Les tubes 16 ou 17 sont par exemple des tubes de raccord avec un flexible (non représenté), la fixation de l'un sur l'autre étant réalisée de façon connue en elle-même, par exemple par sertissage d'une bague 26 en forme de cloche, fixée entre deux pliures 27 du tube, sur le flexible par exemple en élastomère.

On va maintenant décrire un procédé de fabrication de l'enceinte selon l'invention.

On fixe tout d'abord les tubes 16 et 17 dans les orifices préalablement enduits de colle par emboutissage et déformation desdits tubes dans les orifices.

On enduit ensuite la surface interne de la demi-coque 3 de plusieurs cordons de colle du type connu sous la dénomination KÖMMERLING, par exemple en trois bandes circulaires régulièrement espacées,

Dans un mode particulier de réalisation il est prévu une rainure circulaire 12' sur la surface interne de la paroi 6, par exemple obtenue par pliure de la paroi 6, à proximité de l'extrémité ouverte de la demi-coque externe, dans laquelle un cordon de colle est disposé.

On garantit ainsi la présence de colle sur tout le pourtour malgré les frottements lors de l'introduction de la demi-coque interne dans la demi-coque externe.

On introduit ensuite la demi-coque interne 6 dans l'autre demi-coque en exerçant une pression, par exemple d'1 ou 2 bars, jusqu'à l'arrivée en butée de la portion 10 contre la surface interne du fond 3.

Puis on sertit de façon connue en elle-même l'extrémité de la demi-coque externe sur le fond de la demi-coque interne.

Avec une enceinte selon l'invention, par exemple conçue en alliage d'aluminium 1070 (norme NFA02104), de dimensions suivantes :
diamètre externe : 50 mm
longueur : 50 à 70 mm
épaisseur totale (2 parois cylindriques) : 2,8 mm
et/ou
diamètre externe : 65 mm
longueur : 110 à 200 mm
épaisseur totale (2 parois cylindriques) : 3 mm
les résultats de résistance à la pression suivants
ont été ainsi obtenus :
Pression de service : 27 bars
Pression de destruction : > 120 bars

L'invention ne se limite pas aux modes de réalisation plus particulièrement décrits mais en embrasse au contraire les variantes où le matériau utilisé est une matière plastique telle que du polyamide armé de fibres de verre ; le sertissage est effectué par filage ou par magnéto-formage ; un seul fond est percé de deux orifices, l'enceinte comprenant de plus des moyens déshydratants.

## Revendications

1. Enceinte (1) munie d'un premier tube (16), de passage d'un fluide sous pression comprenant deux demi-coques (2, 5) à savoir une première et une deuxième demi-coques formées chacune d'une paroi cylindrique (3, 6) munie d'un côté d'un fond (4, 7) formé d'une seule pièce avec ladite paroi, et présentant de l'autre côté une ouverture fermée par l'autre demi-coque, la paroi cylindrique de la deuxième demi-coque étant introduite à frottement dans la première demi-coque à laquelle elle est fixée par collage, ladite enceinte étant percée d'un orifice cylindrique d'entrée (14) munie dudit premier tube et d'un orifice cylindrique de sortie (15) du fluide
caractérisée en ce que la première demi-coque est de plus sertie sur la périphérie (8) du fond de la deuxième demi-coque,
et en ce que l'orifice cylindrique de sortie (15) est muni d'un deuxième tube (17) de passage du fluide, différent du premier tube.

2. Enceinte munie de tubes, selon la revendication 1, caractérisée en ce que les première et deuxième demi-coques (3, 5) sont en alliage d'aluminium.

3. Enceinte munie de tubes, selon l'une quelconque des revendications 1 et 2, caractérisée en ce que la portion d'extrémité (10) de la paroi périphérique de la deuxième demi-coque est en contact ou sensiblement en contact avec la surface interne du fond de la première demi-coque.

4. Enceinte munie de tubes, selon l'une quelconque des revendications précédentes, caractérisée en ce que le diamètre interne de la paroi cylindrique (3) de la première demi-coque (2) présente un rétrécissement au niveau de la portion d'extrémité (10) de la paroi de la seconde demi-coque avec laquelle elle coopère en force.

5. Enceinte munie de tubes, selon l'une quelconque des revendications précédentes, caractérisée en ce que les tubes (16, 17) de passage du fluide dans l'enceinte, munissant respectivement les orifices cylindriques, sont fixés au fond correspondant par emboutissage du tube de part et d'autre dudit fond.

6. Enceinte munie de tubes, selon la revendication 5, caractérisée en ce que chaque tube est également fixé par collage dans l'orifice du fond.

7. Enceinte munie de tubes, selon l'une quelconque des revendications 5 et 6, caractérisée en ce que l'orifice comprend un épaulement interne débouchant du côté de l'enceinte.

8. Enceinte munie de tubes, selon l'une quelconque des revendications précédentes caractérisées en ce que chaque fond comprend un orifice cylindrique (14, 15), muni d'un tube de passage, (16, 17) les orifices étant excentrés par rapport à l'axe des parois cylindriques.

9. Enceinte munie de tubes, selon l'une quelconque des revendications précédentes, caractérisée en ce que elle comporte de plus au moins un joint torique en élastomère d'étanchéité (20, 21) entre les parois cylindriques des deux demi-coques.

10. Procédé de fabrication d'une enceinte munie de tubes, de passage d'un fluide sous pression en alliage d'aluminium, caractérisé en ce que
- on fixe deux tubes (16, 17), respectivement par collage et emboutissage desdits tubes de part et d'autre des fonds de deux demi-coques, dans deux orifices percés dans lesdits fonds, de façon excentrée par rapport à l'axe desdites demi-coques,
- on enduit au moins en partie de colle polymérisable la surface interne ou externe d'au moins une des deux demi-coques,
- on introduit la demi-coque dite interne, dans l'autre demi-coque dite externe, avec laquelle elle coopère à frottement, jusqu'à venir sensiblement en butée contre le fond de ladite demi-coque externe,
et
- on sertit l'extrémité de la demi-coque externe sur le fond de la demi-coque interne.

11. Silencieux de circuit de climatisation pour voiture automobile comportant une enceinte (1) munie de tubes (16, 17), selon l'une quelconque des revendications 1 à 9.

12. Bouteille déshydratante pour circuit de climatisation pour voiture automobile comportant une enceinte munie de tubes (16, 17), selon l'une quelconque des revendications 1 à 9.

## Patentansprüche

1. Behälter (1) mit einem ersten Rohr (16) zum Durchfluß eines unter Druck stehenden Fluids, enthaltend zwei Halbschalen (2, 5), nämlich eine erste und eine zweite Halbschale, die beide aus einer zylindrischen Wand (3, 6) bestehen, die an einer Seite mit einem Boden (4, 7) versehen ist, der mit der Wand einstückig ausgebildet ist, und die auf der anderen Seite eine durch die andere Halbschale verschlossene Öffnung aufweist, wobei die zylindrische Wand der zweiten Halbschale mit Reibung in die erste Halbschale eingesetzt ist, an der sie durch Kleben befestigt ist, wobei der Behälter durch eine mit dem ersten Rohr versehene zylindrische Eingangsöffnung (14) und durch eine zylindrische Ausgangsöffnung (15) für das Fluid durchdrungen ist,
**dadurch gekennzeichnet,**
**daß** die erste Halbschale zusätzlich auf dem Umfang (8) des Bodens der zweiten Halbschale gecrimpt ist, und
**daß** die zylindrische Ausgangsöffnung (15) mit einem für den Durchfluß des Fluids vorgesehenen zweiten, gegenüber dem ersten Rohr anderen Rohr (17) versehen ist.

2. Behälter mit Rohren nach Anspruch 1,
**dadurch gekennzeichnet,**
**daß** die erste und die zweite Halbschale (3, 5) aus einer Aluminiumlegierung bestehen.

3. Behälter mit Rohren nach einem der Ansprüche 1 und 2,
**dadurch gekennzeichnet,**
**daß** das Endteil (10) der Umfangswand der zweiten Halbschale in Berührung oder im wesentlichen in Berührung steht mit der Innenfläche des Bodens der ersten Halbschale.

4. Behälter mit Rohren nach einem der vorangehenden Ansprüche,
**dadurch gekennzeichnet,**
**daß** der Innendurchmesser der zylindrischen Wand (3) der ersten Halbschale (2) bei der Höhe des Endteils (10) der Wand der zweiten Halbschale eine Verengung aufweist, mit der das Endteil (10) kraftschlüssig zusammenwirkt.

5. Behälter mit Rohren nach einem der vorangehenden Ansprüche,
**dadurch gekennzeichnet,**
**daß** die Rohre (16, 17) zum Durchfluß des Fluids in dem Behälter, die jeweils mit den zylindrischen Öffnungen verbunden sind, an dem Boden jeweils durch Aufbördelung des Rohrs zu beiden Seiten des Bodens befestigt sind.

6. Behälter mit Rohren nach Anspruch 5,
**dadurch gekennzeichnet,**
**daß** jedes Rohr ebenfalls durch Kleben in der Öffnung des Bodens befestigt ist.

7. Behälter mit Rohren nach einem der Ansprüche 5 und 6,
**dadurch gekennzeichnet,**
**daß** die Öffnung eine innere, von der Seite des Behälters ausgehende Schulter aufweist.

8. Behälter mit Rohren nach einem der vorangehenden Ansprüche,
**dadurch gekennzeichnet,**
**daß** jeder Boden eine zylindrische Öffnung (14, 15) aufweist, die mit einem Durchflußrohr (16, 17) verbunden ist, wobei die Öffnungen exzentrisch zu einer Achse der zylindrischen Wände liegen.

9. Behälter mit Rohren nach einem der vorangehenden Ansprüche,
**dadurch gekennzeichnet,**
**daß** der Behälter zusätzlich wenigstens einen O-Ring (20, 21) aus einem Elastomer zwischen den zylindrischen Wänden der beiden Halbschalen aufweist.

10. Verfahren zur Herstellung eines Behälters mit Rohren zum Durchfluß eines unter Druck stehenden Fluids aus einer Aluminiumlegierung,
gekennzeichnet durch folgende Schritte:
es werden zwei Rohre (16, 17) jeweils durch Kleben und Aufbördeln der Rohre zu beiden Seiten der Böden der beiden Halbschalen in zwei Öffnungen befestigt, die diese Böden exzentrisch zu einer Achse der Halbschalen durchdringen,
es wird wenigstens ein Teil eines polymerisierbaren Klebstoffes auf die Innenfläche oder die Außenfläche wenigstens einer der beiden Halbschalen aufgebracht,
die als innere Halbschale bezeichnete Halbschale wird in die andere, als äußere Halbschale bezeichnete Halbschale eingeführt, mit der sie durch Reibung zusammenwirkt, bis sie im wesentlichen gegen den Boden der äußeren Halbschale stößt, und
das Ende der äußeren Halbschale wird auf dem Boden der inneren Halbschale gecrimpt.

11. Schalldämpfer für einen Klimatisierungskreislauf für ein Kraftfahrzeug mit einem mit Rohren (16, 17) versehenen Behälter (1) nach einem der Ansprüche 1 bis 9.

12. Dehydratisierflasche für einen Klimatisierungskreislauf für ein Kraftfahrzeug mit einem mit Rohren (16, 17) versehenen Behälter (1) nach einem der Ansprüche 1 bis 9.

## Claims

1. Enclosure (1) provided with a first pipe (16), for the passage of a pressurised fluid, comprising two half-shells (2, 5), namely a first and a second half-shell each formed of a cylindrical wall (3, 6) provided on one side with a bottom (4, 7) formed in a single piece together with said wall, and having on the other side an opening closed by the other half-shell, the cylindrical wall of the second half-shell being inserted with friction into the first half-shell, to which it is fixed by adhesion, said enclosure being perforated by a cylindrical inlet orifice (14) provided with said first pipe and a cylindrical outlet orifice (15) for the fluid
characterised in that the first half-shell is moreover crimped on the periphery (8) of the bottom of the second half-shell,
and in that the cylindrical outlet orifice (15) is provided with a second pipe (17) for passage of the fluid, different from the first pipe.

2. Enclosure provided with pipes, according to Claim 1, characterised in that the first and second half-shells (3, 5) are made of aluminium alloy.

3. Enclosure provided with pipes, according to either one of Claims 1 and 2, characterised in that the end portion (10) of the peripheral wall of the second half shell is in contact or substantially in contact with the inner surface of the bottom of the first half-shell.

4. Enclosure provided with pipes, according to any one of the preceding claims, characterised in that the inner diameter of the cylindrical wall (3) of the first half-shell (2) is smaller in the area of the end portion (10) of the wall of the second half-shell with which it co-operates through force.

5. Enclosure provided with pipes, according to any one of the preceding claims, characterised in that the pipes (16, 17) for passage of the fluid into the enclosure, fitting respectively the cylindrical orifices, are fixed to the corresponding bottom by swaging the pipe on either side of said bottom.

6. Enclosure provided with pipes, according to Claim 5, characterised in that each pipe is also fixed by adhesion in the orifice of the bottom.

7. Enclosure provided with pipes, according to either one of Claims 5 and 6, characterised in that the orifice comprises an internal shoulder projecting from the side of the enclosure.

8. Enclosure provided with pipes, according to any one of the preceding claims characterised in that each bottom comprises a cylindrical orifice (14, 15), provided with a passage pipe (16, 17), the orifices being off-centre with respect to the axis of the cylindrical walls.

9. Enclosure provided with pipes, according to any one of the preceding claims, characterised in that it also comprises at least one O-ring seal (20, 21) made of elastomer between the cylindrical walls of the two half-shells.

10. Method of manufacturing an enclosure provided with pipes, for the passage of pressurised fluid made of aluminium alloy, characterised in that
- the two pipes (16, 17) are fixed respectively by adhesion and swaging of said pipes on either side of the bottoms of two half-shells, into two orifices made in said bottoms, off-centre with respect to the axis of said half-shells,
- the inner or outer surfaces of at least one of the two half-shells is coated at least partly with polymerisable adhesive,
- the half-shell, called the inner one, is inserted into the other half-shell, called the outer one, with which it co-operates by friction, until it substantially abuts against the bottom of said outer half-shell, and
- the end of the outer half-shell is crimped on the bottom of the inner half-shell.

11. Silencer of an air-conditioning system for a motor vehicle comprising an enclosure (1) provided with pipes (16, 17), according to any one of Claims 1 to 9.

12. Dehumidifying bottle for an air-conditioning system for a motor vehicle comprising an enclosure provided with pipes (16, 17), according to any one of Claims 1 to 9.
